# EUROPEAN PATENT APPLICATION

(11) **EP 4 485 113 A1**
(43) Date of publication of application: **01.01.2025**
(21) Application number: 23181837.8
(22) Date of filing: 27.06.2023
(51) Int. Cl.: G05D 1/02

(54) **METHOD TO OPERATE A FORESTRY VEHICLE, AND ASSOCIATED VEHICLE CONTROL SYSTEM**

(71) Applicant: Komatsu Forest AB, 907 04 Umeå (SE)
(72) Inventor: ASSARSSON, Peter, 907 04 Umeå (SE); LUNDGREN, Karl, 907 04 Umeå (SE)
(74) Representative: AWA Sweden AB

(57) **Abstract**

Method to operate a forestry vehicle, wherein the method comprises
determining (110) a position of the forestry vehicle,
receiving (120) a terrain region data set of at least a part of the surrounding terrain of the forestry vehicle, comprising a plurality of sub-regions wherein a terrain metric is associated with each of the plurality of sub-regions indicating a characteristic terrain type, and
determining (130), by a control unit, an electric energy usage metric of at least two of the plurality of sub-regions, respectively, based on the corresponding terrain metric
calculating (140), by a control unit, a navigation route to a destination for the forestry vehicle based on the electric energy usage metric of the at least two sub-regions and the position of the forestry vehicle.

## Description

### Field of the invention

The present invention relates to a method to operate a forestry vehicle, and a forestry vehicle system for operating a forestry vehicle.

### Technical background

Different types of vehicles are frequently used within different areas to conduct work and moving equipment, products, objects etc. One example is within the forest industry where powerful vehicles are used for harvesting and transporting/moving felled trees from the forest.

A harvester and a forwarder are examples of common forestry vehicles, typically operating at least partially in sync, where the forwarder is to transport felled trees harvested by the harvester to be further processed in e.g. a saw or pulp mill. Operating such forestry vehicles through e.g. a terrain of a forest work site is often performed manually by an operator. In some instances, a path for the harvester and/or the forwarder is determined beforehand, to appoint an efficient path for the forestry vehicles to follow in terms of e.g. reduction of time and/or distance.

Such approach often requires a skilled operator and may be error-prone due to e.g. the human factor. Hinders along the chosen path such as large rocks, high water levels, and unsteady terrain put hardship on the skilled operator and forcing them to re-navigate the chosen path. Consequently, this may result in a reduced efficiency of the forestry vehicle.

Therefore, there is still a need for a further improved method for operating a forestry vehicle according to a navigation route in an efficient manner regarding e.g. time and distance.

### Summary

It would be advantageous to achieve a method that at least is alleviating some of the above-mentioned drawbacks. To better address one or more of these concerns a method for operating a forestry vehicle is presented, as well as a forestry vehicle system for operating a forestry vehicle. Preferred embodiments of the method and system are defined in the dependent claims.

Hence, according to a first aspect of the present invention, there is provided a method to operate a forestry vehicle, wherein the method comprises:
- determining a position of the forestry vehicle,
- receiving a terrain region data set of at least a part of the surrounding terrain of the forestry vehicle, comprising a plurality of sub-regions wherein a terrain metric is associated with each of the plurality of sub-regions indicating a characteristic terrain type,
- determining, by a control unit, an electric energy usage metric of at least two of the plurality of sub-regions, respectively, based on the corresponding terrain metric, and
- calculating, by a control unit, a navigation route to a destination for the forestry vehicle based on the electric energy usage metrics of the at least two sub-regions and the position of the forestry vehicle.

It will be appreciated that the method to operate a forestry vehicle comprises calculating, by a control unit, a navigation route to a destination for the forestry vehicle based on electric energy usage metrics of at least two sub-regions of a received terrain region data set of the surrounding terrain of the forestry vehicle, and the position of the forestry vehicle. The determined electric energy usage metrics of the at least two sub-regions based on corresponding terrain metric may for example indicate a required minimum level of electric energy provided by the forestry vehicle. The terrain metrics are associated with a corresponding sub-region indicating a characteristic terrain type. A characteristic terrain type may for example comprise an elevation, a slope, an obstruction, and/or a composition of the corresponding sub-region of the terrain region data set.

The method according to the first aspect of the present invention is favorable as the navigation route may therefore be calculated based on the electric energy usage metrics so as to optimize the navigation route in regard to one or more of e.g. operating time, energy consumption, wear on the forestry vehicle, etc. For example, the (optimal) navigation route may exclude routes which would entail unstable terrain, and/or slopes too steep for the forestry vehicle to maneuver at all, or in a time and/or energy efficient manner. In a further example, the navigation route may be chosen to minimize the operating time, such as time to destination, while considering the energy consumption, such that the forestry vehicle may reach its destination. In a further example, the navigation route may be chosen to provide a compromise solution taking into consideration operating time, energy consumption and wear of the forestry vehicle.

It will be further appreciated that calculating the navigation route is performed by a control unit to e.g. be provided to an operator of the forestry vehicle. This simplifies the operating and navigating of the forestry vehicle for an operator, as well as providing a safer working environment for the operator and their surroundings. It is to be understood that the control unit determining the electric energy usage metric of corresponding sub regions may be the same control unit, or a different control unit, than the control unit calculating the navigation route. For example, a first control unit may determine the electric energy usage metric of at least two of the plurality of sub-regions based on the corresponding terrain metric, and a second control unit may calculate the navigation route to a destination for the forestry vehicle based on the electric energy usage metrics of the at least two sub-regions and the position of the forestry vehicle. For example, at least one of the first and the second control unit may be arranged external to the forestry vehicle e.g. in another vehicle or in a computer at another location. Further, at least one of the first and the second control unit may be comprised in the forestry vehicle. The first and second control unit may be part of a forestry vehicle system for operating the forestry vehicle. The first and second control unit may the same control unit and may be arranged on the forestry vehicle.

It will be further appreciated that the method and system may improve the operation of a forestry vehicle comprising an electric motor, and possibly an electric energy storage. An electric motor may introduce the advantages of having a higher efficiency, a longer lifespan, less maintenance, less impact on its environment, quieter operation, and quicker and smoother acceleration compared to a traditional combustion engine.

In an embodiment of the present invention, the forestry vehicle may comprise an electric motor and a first electric energy storage associated with a first storage metric indicating a first electric energy storage property and configured to provide electric energy to the electric motor. The calculation of a navigation route may be based on the first storage metric.

The present embodiment is advantageous in that the forestry vehicle may comprise an electric motor and a first electric energy storage associated with a first storage metric indicating a first electric energy storage property. The first storage metric may for example comprise details regarding energy density, power density, capacity, equivalent series resistance (ESR), voltage, efficiency, size, weight, etc., of the first electric energy storage. The step of the method of calculating the navigation route may further be based on the first storage metric.

The present embodiment is favorable as the navigation route may be calculated based on the first storage metric so as to optimize the navigation route regarding e.g. efficiency in terms of operating time and/or energy consumption, as well as wear on the forestry vehicle and/or the electric motor, etc. For example, the (optimal) navigation route may entail an (optimal) distance between an elevation and a slope. This may include enabling that the first electric energy storage has a high state of charge just before the elevation to ensure that the forestry vehicle can endure climbing the elevation, and a low state of charge just before the slope to enable recharging of the first electric energy storage. Furthermore, it is advantageous to optimize the use of an electric energy storage in order to increase its operational life span and operational efficiency, since replacing one may be costly and cumbersome.

In an embodiment of the present invention, the forestry vehicle may comprise a second electric energy storage associated with a second storage metric indicating a second electric energy storage property and configured to provide electric energy to the electric motor. The method may comprise:
- determining an electric energy control scheme for adaptively providing electric energy to the electric motor from the first electric energy storage and the second electric energy storage, based on
   o the first storage metric and the second storage metric, and
   o at least one of the terrain region data set, the determined electric energy usage metrics of the at least two of the plurality of sub-regions, and the position of the forestry vehicle.

The present embodiment is advantageous in that an electric energy control scheme for providing electric energy to the electric motor from at least one of the first electric energy storage and the second electric energy storage is provided. The electric energy control scheme is based on the first storage metric and the second storage metric. The electric energy control scheme may further be based on the terrain region data set, the determined electric energy usage metrics for corresponding sub-regions, and/or the position of the forestry vehicle. For example, the first electric energy storage may be suitable for long-term and low-power output, (e.g., relatively high energy density) whereas the second electric energy storage may be suitable for short-term and high-power output (e.g., relatively high-power density). Different sub-regions of the terrain may require different amounts of energy provided to the electric motor.

Additionally, providing high-power energy to the electric motor may be more suitable for a specific sub-region, compared to providing low-power energy. Hence, the electric energy control scheme, further based on the terrain region data set and/or the electric energy usage metrics, may provide an (optimal) scheme of providing electric energy to the electric motor. For example, the electric energy control scheme may comprise a trade-off between energy density and power density based on the terrain region data set and/or the electric energy usage metrics. The present embodiment may therefore result in an increased efficiency regarding energy consumption, wear on the electric motor, the first electric energy storage, and the second electric energy storage, as well as providing an enhanced operating experience for the operator regarding e.g. simplicity and safety. The present embodiment may provide an improved usage of the electric energy storages to provide an improved power output for improved/stronger/more efficient propulsion. Furthermore, it is advantageous to optimize the use of the first and second electric energy storage in order to increase the operational life span and the operational efficiency of the electric energy storages. Electric energy storages, such as high-level batteries and capacitors used in heavy machinery like forestry vehicles, are valuable, and replacing an electrical energy storage may be costly and cumbersome.

Furthermore, in an embodiment, the first and second electric energy storage are electrically connected, such that electric energy may be transferred between the first and second electric energy storages. In an example, electric energy may be provided from a more traditional battery to a capacitor which may provide increased power for the electric motor, resulting in increased propulsion force.

It is to be understood that the electrical energy control scheme comprises information/instructions for the forestry vehicle on how to provide energy from the first and second electric energy storage to the electric motor, and between the first and second electric energy storage. The electric motor of the forestry vehicle may be powered according to the electric energy control scheme, e.g. by a control unit arranged on the forestry vehicle.

In an embodiment of the present invention, calculating the navigation route may be based on at least one of the electric energy control scheme, the first storage metric, and the second storage metric.

The present embodiment is advantageous in that calculating the navigation route may be based on the additional parameter(s) of the electric energy control scheme, the first storage metric and/or the second storage metric. Hence, the navigation route may be calculated so to match, balance, optimize, etc., the energy drainage of the first and second electric energy storage. This allows for a more efficient operation of the forestry vehicle in terms of e.g. wear on the first and/or second electric energy storage, operating time and energy consumption. For example, the (optimal) navigation route may exclude a route which would require a high-power output for a relatively long duration of time, and instead prioritize a route which (only) requires a high-power output for a short duration of time, if this scheme is beneficial for the first and second electric energy storage.

In an embodiment of the present invention, the forestry vehicle may comprise a combustion engine, an electric motor, and at least one electric energy storage. The at least one electric energy storage is associated with at least one storage metric indicating at least one electric energy storage property, and configured to provide electric energy to the electric motor. The combustion engine and the electric motor may be configured to adaptively provide propulsion for the forestry vehicle. The method may comprise:
- determining a power control scheme for providing power to the propulsion of the forestry vehicle from at least one of the combustion engine and the electric motor, based on at least one of the terrain region data set, the at least one electric energy usage metric, the at least one storage metric, and the position of the forestry vehicle,
wherein calculating the navigation route may be based on the power control scheme.

The present embodiment is advantageous in that the forestry vehicle may comprise a combustion engine and an electric motor. This combination may especially be favorable in the forest industry, where the recharging opportunities may be limited. Furthermore, the navigation route may be based on a determined power control scheme for providing power to the propulsion of the forestry vehicle. The power control scheme may be based on the terrain region data, the electric energy usage metric(s), the storage metric(s), and/or the position of the forestry vehicle. For example, the navigation route may be calculated such that the route allows a prioritized extraction of power from the electric motor over the combustion engine by the power control scheme when possible. Thus, the present embodiment may provide a reliant and efficient, at least in terms of operating time and energy consumption, method of operating a forestry vehicle.

In an embodiment of the present invention, the forestry vehicle may comprise a first sensor, and wherein the method may comprise:
- measuring, by the first sensor, a steering angle, α, of the forestry vehicle in relation to the surrounding terrain of the forestry vehicle,
wherein calculating the navigation route may be based on the steering angle.

The present embodiment is advantageous in that the forestry vehicle may comprise a first sensor measuring a steering angle of the forestry vehicle in relation to its surrounding terrain. The calculating of the navigation route may be further based on the steering angle. This is favorable as the first sensor measurement(s) enables an iterative update to the navigation route during operation of the forestry vehicle. For example, if the measured steering angle is above a predetermined threshold which would for example lead to an unsuitably sharp turn by the forestry vehicle, the navigation route may be re-calculated to prevent the sharp turn. The present embodiment is beneficial in that it may provide for a safer operation of the forestry vehicle in regard to a possible operator of the forestry vehicle, and the forestry vehicle itself.

In an embodiment of the present invention, the forestry vehicle may comprise a second sensor, and wherein the method may comprise:
- measuring, by the second sensor, at least one terrain property of the surrounding terrain of the forestry vehicle,
wherein calculating the navigation route may be based on the at least one terrain property.

The present embodiment is advantageous in that the forestry vehicle may comprise a second sensor measuring a terrain property of the surrounding terrain of the forestry vehicle. The terrain property may for example comprise elevation, slope, obstruction, and/or composition of the terrain. The calculating of the navigation route may further be based on the terrain property. This is favorable as the second sensor measurement(s) enables an iterative update to the navigation route during operation of the forestry vehicle. Updating the navigation route may be beneficial and/or required when encountering unexpected external environmental factors which may hinder or prevent the original calculated navigation route, for example snow or a fallen-down tree. The present embodiment thus provides a method for operating the forestry vehicle in a safer manner in regard to a possible operator of the forestry vehicle, and the forestry vehicle itself. Additionally, the present embodiment may prevent the forestry vehicle getting physically stuck due to changes in the terrain. This entails for a more time efficient way of operating the forestry vehicle.

In an embodiment of the present invention, the forestry vehicle may comprise a third sensor, and wherein the method may comprise:
- measuring, by the third sensor, a depth of the tracks of the forestry vehicle and generate a depth data set,
wherein calculating the navigation route may be based on the depth data set.

The present embodiment is advantageous in that the forestry vehicle may comprise a third sensor measuring a depth of the tracks of the forestry vehicle, generating a depth data set. The calculating the navigation route may be further based on the depth data set. This is favorable as the third sensor measurement(s) enables an iterative update to the navigation route during operation of the forestry vehicle. The depth data set may provide an improved way of interpreting and analyzing the surrounding terrain. The depth data set may for example indicate the stability of the terrain, as well as the impact on the terrain by the forestry vehicle. Hence, the present embodiment provides a further enhanced method of operating the forestry vehicle in terms of e.g. safety of a possible operator of the forestry vehicle and of the forestry vehicle itself, as well as in terms of time and energy efficiency.

In an embodiment of the present invention, calculating the navigation route may be associated with at least one operating mode that prioritizes at least one of a power distribution, an energy consumption, a time duration, a vehicle condition, and a suspension utilization.

The present embodiment is advantageous in that the calculating the navigation route may be associated with at least one operating mode prioritizing different operating properties. This allows for a forestry vehicle that is versatile in regard to (a) desire(s) of an operator in terms of operating the forestry vehicle. A desired outcome of an operating mode of the forestry vehicle may for example be maneuvering the quickest and most vehicle-friendly navigation route. In additional, the present embodiment allows for an easier and more accessible way of operating the forestry vehicle by a possible operator.

According to a second aspect of the present invention, there is provided a forestry vehicle system for operating a forestry vehicle comprising:
- a positioning unit arranged on the forestry vehicle and configured to generate positional data indicating the position of the forestry vehicle, and
- a control unit configured to
   ∘ receive a terrain region data set of at least a part of the surrounding terrain of the forestry vehicle, comprising a plurality of sub-regions wherein a terrain metric is associated with each of the plurality of sub-regions indicating a characteristic terrain type,
   ∘ determine an electric energy usage metric of at least two of the plurality of sub-regions based on the corresponding terrain metric, and
   ∘ calculate a navigation route to a destination for the forestry vehicle based on the determined electric energy usage metrics of the at least two sub-regions and the generated positional data.

It will be appreciated that the forestry vehicle system comprises a positioning unit configured to generate positional data, and a control unit configured to receive a terrain region data set, determine electric energy usage metrics, and calculating a navigation route based on received and determined data. The forestry vehicle system according to the second aspect is favorable as the control unit calculates the navigation route based on the mentioned parameters, which may result in an efficient navigation route regarding e.g. operating time, energy consumption, and wear of the forestry vehicle system.

Thus, the first and second aspect of the present invention are based on the common concept or idea of providing a method or a forestry vehicle system for operating a forestry vehicle in an efficient and reliant manner. Hence, the first and second aspect of the present invention share a common general inventive concept of providing a method or a forestry vehicle system wherein terrain data is used to determine a predicted/estimated electric energy usage of different regions in the terrain data set and calculate a navigation route for a forestry vehicle based on the determined electric energy usage for different regions, making the operating of the forestry vehicle safer, more efficient, and more reliant. In other words, by determining a prediction/estimation of electric energy usage of the terrain in which a forestry vehicle operates, and then calculating a navigation route based at least one the prediction/estimation of the different electric energy usages, the use/pathing/propulsion of the forestry vehicle may be better optimized in regard to electric energy usage.

In an embodiment of the present invention, the forestry vehicle may comprise:
- an electric motor, and
- a first electric energy storage associated with a first storage metric indicating a first electric energy storage property and configured to provide electric energy to the electric motor,
wherein the control unit may be configured to calculate the navigation route also based on the first storage metric.

The present embodiment is advantageous in that the forestry vehicle comprises an electric motor and a first electric energy storage associated with a first storage metric, wherein the control unit is configured to calculate the navigation route based on the first storage metric. The control unit may be configured to calculate the navigation route as to optimize efficiency regarding operating time and/or energy consumption, as well as wear of the forestry vehicle and/or of the forestry vehicle system. For example, the navigation route may entail opportunities for the first electric energy storage to recharge during e.g. a slope, as well as ensuring that the first electric energy storage can provide sufficient electric energy to the electric motor during the navigation route.

In an embodiment of the present invention, the forestry vehicle may comprise:
- a second electric energy storage associated with a second storage metric indicating a second electric energy storage property and configured to provide electric energy to the electric motor,
wherein the control unit may be configured to
- determine an electric energy control scheme for adaptively providing electric energy to the electric motor from the first electric energy storage and the second electric energy storage based on
   ∘ the first storage metric and the second storage metric, and
   ∘ at least one of the terrain region data set, the determined electric energy usage metrics of the at least two of the plurality of sub-regions, and the position of the forestry vehicle, and
- calculate the navigation route based on the electric energy control scheme.

The present embodiment is advantageous in that the control unit is configured to determine an electric energy control scheme based on the first and second storage metric. The control unit is further configured to determine the electric energy control scheme based on the terrain region data set, the electric energy usage metrics, and/or the position of the forestry vehicle. The control unit is further configured to calculate the navigation route based on a determined electric energy control scheme for providing electric energy to the electric motor. This entails for a more efficient operation by the forestry vehicle system of the forestry vehicle in terms of e.g. wear on the first and/second electric energy storage. Hence, the control unit may calculate the navigation route based on a tradeoff between the first and second storage metric. For example, the first and second electric energy storage may be suitable for different energy demands, such as low-power during a longer period, and high-power during a shorter period. A long-term low-power energy demand may for example operate the forestry vehicle at a constant speed at a level road, whereas a short-term high-power energy demand may be accelerating the forestry vehicle from a still position or climbing a steep hill.

In an embodiment of the present invention, the first electric energy storage may comprise at least one battery and the second electric energy storage may comprise at least one capacitor.

The present embodiment is advantageous in that the first and second electric energy storage may comprise a battery and a capacitor, respectively. The combination of a battery and a capacitor for providing electric energy to the electric motor is favorable as it may provide for a more efficient forestry vehicle system in terms of at least operation time and energy consumption. The possible variation in sufficient power delivery to the electric motor, due to e.g. a level route followed by a steep hill, is efficiently managed by the combination of the battery and the capacitor. Additionally, the present embodiment may require less space for the first and second electric energy storage, as well as having a reduced weight.

In an embodiment of the present invention, the forestry vehicle may comprise a combustion engine, an electric motor, and an electric energy storage which may be configured to provide electric energy to the electric motor, wherein the combustion engine and the electric motor may be configured to adaptively provide propulsion for the forestry vehicle. The control unit may be configured to determine a power control scheme for providing power to the propulsion of the forestry vehicle from at least one of the combustion engine and the electric motor based on at least one of the terrain region data set, the electric energy usage metric, and the positional data. The control unit may be further configured to calculate the navigation route based on the power control scheme.

The present embodiment is advantageous in that the forestry vehicle may comprise a combustion engine and an electric motor. Having both a combustion engine and an electric motor available for providing power to the propulsion of the forestry vehicle may favorable, especially in the forest industry where recharging opportunities may be limited. Furthermore, the control unit may be configured to determine a power control scheme and calculating the navigation route based on the power control scheme. For example, the control unit may determine the power control scheme and calculate the navigation route such that the electric motor mainly provides power to the propulsion. This may involve favoring a level navigation route compared to an uneven route when possible. Furthermore, the control unit may calculate the navigation route which allows the electric energy storage to be recharged during for example a slope. Thus, the present embodiment provides for a reliant and efficient, at least in terms of operating time and energy consumption, forestry vehicle system.

In an embodiment of the present invention, the forestry vehicle system may comprise:
- a second sensor configured to measure at least one terrain property of the surrounding terrain of the forestry vehicle,
wherein the control unit may be configured to calculate the navigation route based on the at least one terrain property.

The present embodiment is advantageous in that the forestry vehicle system may comprise a second sensor configured to measure (a) terrain property(ies) of the surrounding terrain of the forestry vehicle. The terrain property may for example comprise elevation, slope, obstruction, and/or composition of the terrain. The control unit may be configured to calculate the navigation route based on the terrain property(ies). This is favorable as the control unit may perform (iterative) updates to the navigation route during operation of the forestry vehicle, with collected data from the second sensor. For example, the calculated navigation route may be re-calculated during operation of the forestry vehicle if a terrain property indicates an unstable terrain due to e.g. high-water content of the terrain.

### Brief description of the drawings

The invention will be better understood through the following illustrative and non-limiting detailed description of preferred embodiments, with reference to the appended drawings, in which:
Figure 1 illustrates schematically the different steps of the method according to an exemplifying embodiment of the invention.
Figure 2 illustrates schematically various steps of a part of the method according to exemplifying embodiments of the present invention.
Figure 3 illustrates a schematic side view of a forestry vehicle system according to an exemplifying embodiment of the present invention.
Figure 4 illustrates a schematic side view of the forestry vehicle system according to an exemplifying embodiment of the present invention.
Figure 5 illustrates a schematic top view of an operating region comprising a plurality of sub-regions according to an exemplifying embodiment of the present invention.

All figures are schematic, not necessarily to scale, and generally only show parts which are necessary in order to elucidate the invention, wherein other parts may be omitted or merely suggested.

### Detailed description of embodiments

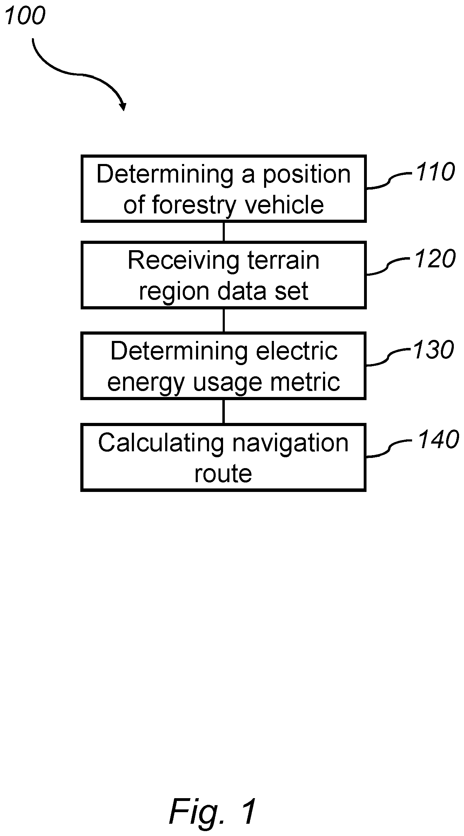

Figure 1 illustrates schematically the different steps of the method 100 according to an exemplifying embodiment of the present invention. The method 100 to operate a forestry vehicle, comprising a control unit, comprises determining 110 a position of the forestry vehicle. The positioning of the forestry vehicle may be determined 110 by e.g. a satellite navigation system such as a global navigation satellite system, GNSS, unit and/or a mathematical algorithm such as a simultaneous localization and mapping, SLAM, algorithm. According to an example, determining 110 a position of the forestry vehicle is performed by a GNSS unit comprising real-time kinematic positioning, RTK. The precision of the GNSS unit to determine 110 the position of the forestry vehicle may be improved by the use of the RTK technique. The control unit may be internal, external, or a combination of them both.

The method 100 further comprises receiving 120 a terrain region data set of at least a part of the surrounding terrain of the forestry vehicle, comprising a plurality of sub-regions wherein a terrain metric is associated with each of the plurality of sub-regions indicating a characteristic terrain type. The control unit may be configured to receive the terrain region data set. Thus, the surrounding terrain of the forestry vehicle is divided, split, partitioned, etc., into sub-regions. The sub-regions may for example be 2-dimensional or 3-dimensional sub-regions, cells, elements, zones, etc., having the shape of a polygon or a polyhedron, respectively. The sub-regions may constitute a mesh, grid, or the like of the surrounding terrain. The sub-regions may have the same shape, or different, compared to each other. Each of the sub-regions is associated with a corresponding terrain metric, indicating a characteristic terrain type of that sub-region. The terrain metric may for example comprise an elevation, a slope, an obstruction, and/or a composition of the corresponding sub-region of the terrain region data set. The terrain region data set may for example be generated by at least one of a camera arrangement, a radar arrangement, and a LIDAR arrangement. The terrain region data set may be gathered using ground-based techniques and/or aerial-based techniques.

Furthermore, the method 100 comprises determining 130, by the control unit, an electric energy usage metric of at least two of the plurality of sub-regions, respectively, based on the corresponding terrain metric. Hence, the control unit may determine 130 an electric energy usage metric of a sub-region indicating a required electric energy by the forestry vehicle, based on the corresponding terrain metric. For example, a first sub-region associated with a first terrain metric indicating a first characteristic terrain type of an elevation may correspond to a first electric energy usage metric indicating a higher required electric energy compared to a second electric energy usage metric of a second sub-region associated with a second terrain metric indicating a second characteristic terrain type of a slope.

The method 100 further comprises calculating 140, by the control unit, a navigation route to a destination for the forestry vehicle based on the electric energy usage metrics of the at least two sub-regions and the position of the forestry vehicle. Hence, the control unit calculates 140 the navigation route to a destination, target, aim, etc., for the forestry vehicle to travel, subject to the electric energy usage metrics of the corresponding sub-regions, and the position of the forestry vehicle. For example, the control unit may calculate 140 a navigation route which optimizes the energy consumption of the forestry vehicle by prioritizing a navigation route comprising sub-regions with corresponding electric energy usage metrics indicating relatively low energy usage.

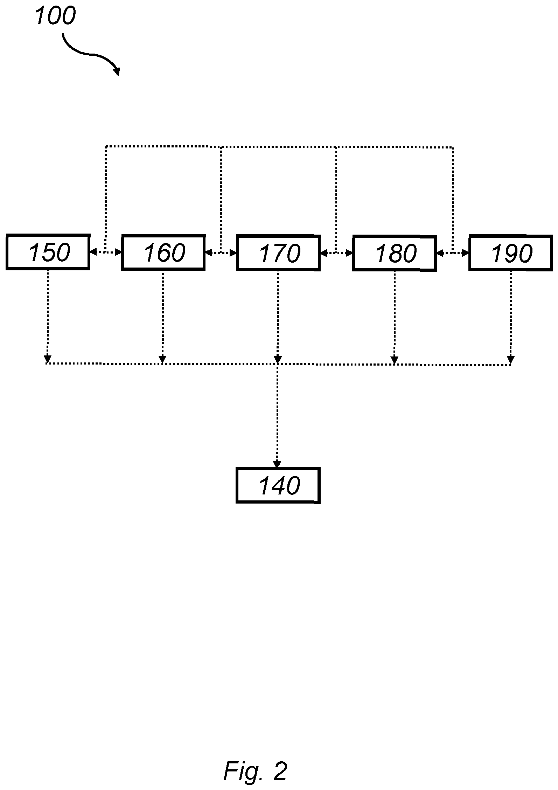

Figure 2 illustrates schematically various steps of a part of the method 100 according to exemplifying embodiments of the present invention. It should be noted that the method 100 to operate a forestry vehicle described in figure 2 has several features in common with the method 100 described in figure 1, and it is hereby referred to figure 1 and the associated text for an increased understanding of some of the features and/or functions of the method 100. It should also be noted that the schematic illustration in figure 2 may not disclose every available combination, permutation etc., of the steps of the method 100 of the exemplifying embodiments for the sake of simplicity. Therefore, figure 2 should be interpreted as non-limiting in possible alterations and/or combinations within and between the steps of the method 100 of the exemplifying embodiments.

According to an exemplifying embodiment in figure 2, the forestry vehicle comprises an electric motor and a first electric energy storage associated with a first storage metric indicating a first electric energy storage property. The first electric energy storage may for example comprise a battery, a capacitor, and/or a supercapacitor. The first storage metric indicating the first electric energy storage property may for example signify the ability of the first electric energy storage to deliver and/or store electric energy. The first storage metric may for example comprise energy density, power density, capacity, equivalent series resistance (ESR), voltage, efficiency, size, weight, etc., of the first electric energy storage. The first electric energy storage is configured to provide electric energy to the electric motor. Hence, the forestry vehicle may completely by powered by the electric energy provided by the electric motor from the first electric energy storage.

Furthermore, calculating 140 a navigation route is based on the first storage metric. Hence, calculating 140 the navigation route to a destination for the forestry vehicle to travel is further based on the first storage metric. For example, calculating 140 a navigation route may result in a navigation route which is feasible and/or suitable in regard to the amount of electric energy that can be stored in the first electric energy storage. According to another example, the calculating 140 of a navigation route may result in a navigation route which is feasible and/or suitable in regard to the maximum power output of the first electric energy storage. According to yet another example, the navigation route may be calculated 140 such that the first electric energy storage has adequate time for recharging relative the surrounding terrain gradient. Recharging of the first electric energy storage may for example be done by regenerative braking during a slope. Thus, calculating 140 of the navigation route may entail an optimal navigation route in terms of e.g. operating time, energy consumption, and/or wear on the forestry vehicle, the electric motor, and/or the first electric energy storage. It should be noted that the forestry vehicle comprises at least one electric motor. The forestry vehicle also comprises at least one electric energy storage configured to provide electric energy to the electric motor.

The forestry vehicle further comprises a second electric energy storage associated with a second storage metric indicating a second electric energy storage property. The second electric energy storage may for example comprise a battery, a capacitor, and/or a supercapacitor. The second storage metric indicating the second electric energy storage property may for example signify the ability of the second electric energy storage to deliver and/or store electric energy. The second storage metric may for example comprise details regarding energy density, power density, capacity, equivalent series resistance (ESR), voltage, efficiency, size, weight, etc., of the second electric energy storage. The second electric energy storage is configured to provide electric energy to the electric motor. Hence, the forestry vehicle may completely be powered by the electric energy provided by the electric motor from the first electric energy storage and/or the second electric energy storage. The first and second electric energy storages may be of the same character/type/sort or different. For example, the first electric energy storage may comprise a battery, whilst the second electric energy storage may comprise a supercapacitor. It is preferable to have a first and second electric energy storage which may enable providing both electric energy of high power and high/large energy storage. High power output may allow for high acceleration/propulsion force, whilst high/large energy storage may allow for a longer driving range.

The method 100 further comprises determining 150 an electric energy control scheme for adaptively providing electric energy to the electric motor from the first electric energy storage and the second electric energy storage based on the first storage metric and the second storage metric, and at least one of the terrain region data set, the determined electric energy usage metrics of the at least two of the plurality of sub-regions, and the position of the forestry vehicle. Hence, the electric energy control scheme is based on the first and second storage metric, and the terrain region data set, the electric energy usage metrics for the corresponding sub-regions, and/or the position of the forestry vehicle.

The electric energy control scheme includes the scheme, pattern, strategy, instructions, etc., in adaptively providing electric energy to the electric motor from the first and second electric energy storage. The electric energy may simultaneously be provided to the electric motor from the first and second electric energy storage. It is also feasible that the first and second electric energy alternately provides electric energy to the electric motor. The electric energy control scheme is based on the first and second storage metric. According to an example, the first and second storage metric may indicate the amount of energy stored in the first and second electric energy storage, respectively. The electric energy control scheme may then, for example, ensure that the electric energy is adaptively provided to the electric motor from the first and second electric energy storages such that neither the first nor second electric energy storage is completely out of charge at any time. According to another example, the first and second storage metric may indicate the energy capacity and the power capacity in providing electric energy from the first and second electric energy storage, respectively. The electric energy control scheme may for example control the supply of the electric energy to the electric motor from the first and second electric energy storage further based on the first and second storage metric, together with the electric energy usage metrics for sub-regions of the surrounding terrain. The electric energy control scheme may enable the supply of a long-term and low-power output of electrical energy for a sub-region where this scheme is suitable, whereas another sub-region may benefit from a short-term and high-power output of electrical energy.

Calculating 140 the navigation route is further based on at least one of the electric energy control scheme, the first storage metric, and the second storage metric. Hence, calculating 140 the navigation route to a destination for the forestry vehicle to travel is further based on the electric energy control scheme, the first storage metric, and/or the second storage metric. Thus, the navigation route may be calculated 140 so to match, balance, optimize, etc., the adaptively energy extraction from the first and second electric energy storage. For example, the navigation route may be calculated 140 such that a route which requires a high-power output for a relatively short duration of time is prioritized over a route which requires a high-power output for a longer duration of time, if this is a desirable, appropriate, and/or feasible, etc., approach of operating the first and second electric energy storage.

The forestry vehicle comprises a combustion engine, an electric motor, and at least one electric energy storage. The at least one electric energy storage is associated with at least one storage metric indicating at least one electric energy storage property, and is configured to provide electric energy to the electric motor. The at least one storage metric may for example comprise energy density, power density, capacity, equivalent series resistance (ESR), voltage, efficiency, size, weight, etc., of the at least one electric energy storage. The combustion engine and the electric motor are configured to adaptively provide propulsion for the forestry vehicle. The combustion engine and the electric motor may provide propulsion for the forestry vehicle simultaneously or alternatively. It should be noted that the electric motor and/or the at least one electric energy storage may be the same, or similar, to the electric motor and the first and/or second electric energy storage mentioned herein. Thus, the forestry vehicle may comprise a combustion engine, an electric motor, a first electric energy storage, and a second electric energy storage, wherein the first and the second electric energy storage are configured to provide electric energy to the electric motor. It should also be noted that the combustion engine typically is associated with a fuel tank, reservoir, or the like, configured to store the fuel before combustion occur in the combustion engine.

The method 100 further comprises determining 160 a power control scheme for providing power to the propulsion of the forestry vehicle from at least one of the combustion engine and the electric motor. The power control scheme is based on at least one of the terrain region data set, the at least one electric energy usage metric, the at least one storage metric, and the position of the forestry vehicle. Hence, the power control scheme may conclude the scheme, pattern, strategy, etc., in adaptively providing propulsion for the forestry vehicle. The combustion engine and the electric motor may be powered according to the power control scheme, e.g., by a control unit of the forestry vehicle or the forestry vehicle system. According to an example, the power control scheme may prioritize extracting (electric) energy from the electric energy storage(s), over extracting energy from the combustion engine, to provide propulsion to the forestry vehicle via the electric motor ahead of ascending an elevation. This is especially useful if the elevation is followed by a slope. This due to the fact that the electric energy storage(s), now having a low state of charge, may optimize recharging during descension of the slope. Recharging of the electric energy storage(s) may for example be done by regenerative braking. According to another example, the power control scheme may ensure that the electric energy storage(s) is fully charged before climbing an elevation, if for example it is preferable to prioritize the utilization of the electric energy storage(s) in relation to the combustion engine. This may be desirable due to e.g. lower amount of emission compared to prioritizing the utilization of the combustion engine. According to yet another example, the storage metric(s) may indicate the amount of (electric) energy in the electric energy storage(s). The power control scheme may then, for example, ensure that the combustion engine and the electric motor adaptively provide propulsion for the forestry vehicle such that the amount of electric energy stored in the electric energy storage(s) does not drop below a predetermined threshold.

Furthermore, calculating 140 the navigation route is based on the power control scheme. Thus, the navigation route may be calculated 140 so to match, balance, optimize, etc., the adaptively provided power of the propulsion of the forestry vehicle from the combustion engine and/or the electric motor. For example, the navigation route may be calculated 140 such that the route allows a prioritized extraction of power from the electric motor over the combustion engine by the power control scheme when possible.

The forestry vehicle further comprises a first sensor. The first sensor may for example be at least one of an inductive sensor, a gyro sensor, and a resistive sensor. Furthermore, the method 100 comprises measuring 170, by the first sensor, a steering angle, α, of the forestry vehicle in relation to the surrounding terrain of the forestry vehicle. Calculating 140 the navigation route is further based on the steering angle, α. The steering angle, α, of the forestry vehicle may evaluate how accurately the forestry vehicle follows the calculated navigation route. Furthermore, the steering angle, α, may indicate if a forthcoming movement of the forestry vehicle according to the calculated navigation route is feasible or not. For example, if the measured steering angle, α, indicate that the calculated navigation route would result in an unsuitably sharp turn, the navigation route may be re-calculated to prevent the sharp turn. Thus, the first sensor may allow for a real-time update of the navigation route based on the steering angle, α.

The forestry vehicle further comprises a second sensor. The second sensor may for example be at least one of a radar unit, a camera unit, and a LIDAR unit. Furthermore, the method 100 comprises measuring 180, by the second sensor, at least one terrain property of the surrounding terrain of the forestry vehicle. Calculating 140 the navigation route is further based on the at least one terrain property. The terrain property may for example comprise details regarding elevation, slope, obstruction, and/or composition of the surrounding terrain. For example, the second sensor may indicate aggravated operating conditions for the forestry vehicle such as wet, sticky, and/or slippery terrain due to changes in the composition of the terrain such as increased water level, sludge, snow, etc. Thus, the navigation route may be re-calculated based on the at least one terrain property. Therefore, the second sensor may allow for a real-time update of the navigation route based on the at least one terrain property. Additionally, the second sensor may also constitute as a supplementing input parameter in determining 110 the position of the forestry vehicle.

The forestry vehicle further comprises a third sensor. The third sensor may for example be at least one of an optic sensor, a radar unit, a camera unit, a LIDAR unit, and an optic unit. Furthermore, the method 100 comprises measuring 190, by the third sensor, a depth of the tracks of the forestry vehicle and generate a depth data set. Calculating 140 the navigation route is further based on the depth data set. The depth data set may for example indicate the stability of the terrain. Furthermore, the depth data may indicate the impact on the terrain by the forestry vehicle. According to an example, the depth data set may evaluate the operating conditions when driving in e.g., mud, sludge, etc.

A control unit of the forestry vehicle and/or a forestry vehicle system may be configured to receive the sensor data from the first, second and/or third sensor. The control unit may be configured to calculate 140 the navigation route based on sensor data from the first, second and/or third sensor.

Determining the electrical energy control scheme and/or the power control scheme may also be based on sensor data from the first, second and/or third sensor, i.e. the electrical energy control scheme and/or the power control scheme may be based on at least one of the steering angle, the terrain property, the depth data set, the terrain region data set, the first storage metric, the second storage metric, the at least one electric energy usage metric, and the position of the forestry vehicle.

It should be noted that the method 100 may comprise measuring additional parameters by additional sensors than depicted in figure 2. According to an example, the method 100 comprises determining the state of the combustion engine, the electric motor, and/or the electric energy storage(s), by measuring a temperature and/or an energy consumption of the combustion engine, the electric motor, and/or the electric energy storage(s). According to another example, further terrain properties may be determined by measuring a suspension pressure of the forestry. According to yet another example, the method 100 comprises determining possible traction slip between the forestry vehicle and the terrain. The traction slip may be determined by comparing a velocity of the forestry vehicle measured by a speed sensor, with a velocity of the forestry vehicle measured by a GNSS-unit. The traction slip may also be determined by comparing the individual measured velocity of wheels of the forestry vehicle. Furthermore, the traction slip may be determined by measuring a pressure difference in different hydraulically powered cylinder arranged on the forestry vehicle. Calculating 140 the navigation route may further be based on at least one of the aforementioned additional parameters. It should also be noted that the measured parameters mentioned herein, such as the steering angle, the terrain property, the depth data set, the suspension pressure, and the traction slip may be transmitted to a transceiver unit, configured to update the terrain region data set.

It should further be noted that the steps of the method 100 may be performed in additional combinations, permutations, etc., compared to figure 2. For example, an original navigation route may be calculated 140. The original navigation route may be re-calculated, updated, etc., by any of the steps of determining 150 an electric energy control scheme, determining 160 a power control scheme, measuring 170 a steering angle, measuring 180 a terrain property, and measuring 190 a depth. This re-calculation may be performed before, during, and/or after operating the forestry vehicle.

It should also be noted that the schematic illustration in figure 2 may not disclose every available combination, permutation etc., of the steps of the method 100 of the exemplifying embodiments for the sake of simplicity. Therefore, figure 2 should be interpreted as non-limiting in possible alterations and/or combinations within and between the steps of the method 100 of the exemplifying embodiments.

Calculating 140 the navigation route is associated with at least one operating mode that prioritizes at least one of a power distribution, an energy consumption, a time duration, a vehicle condition, and a suspension utilization. By "prioritizing", it is here meant optimizing an operating mode by minimizing or maximizing an affiliated parameter associated with that operation mode. For example, the navigation route may be calculated 140 based on an operating mode which prioritizes time duration. The time duration operation mode may be optimized by calculating 140 the navigation route which results in the shortest possible operating time. Calculating 140 the navigation route coupled to least one of the mentioned operating modes may facilitate the manoeuvring and/or operating of the forestry vehicle by a possible operator.

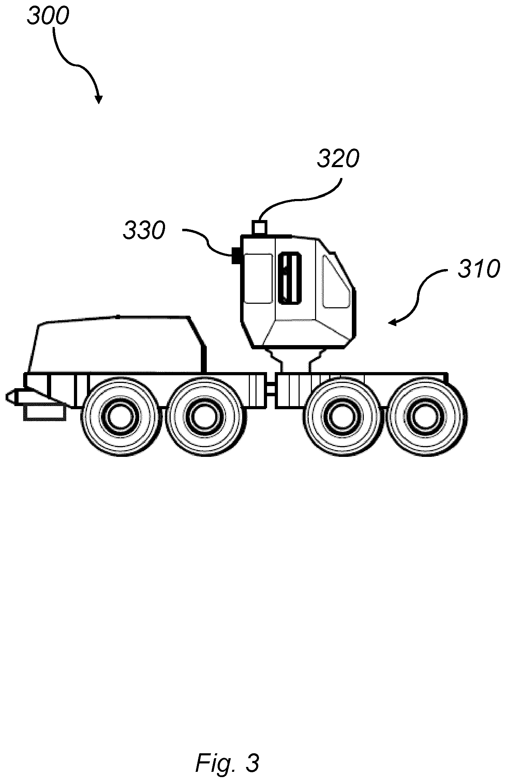

Figure 3 illustrates a schematic side view of a forestry vehicle system 300 according to an exemplifying embodiment of the present invention. It should be noted that the forestry vehicle system 300 and the forestry vehicle 310 described in figure 3 has several features in common with the method and the forestry vehicle described in figures 1 and 2, and it is hereby referred to figures 1 and 2, and the associated text, for an increased understanding of some of the features and/or functions of the forestry vehicle system 300 and the forestry vehicle 310.

The forestry vehicle system 300 for operating a forestry vehicle 310 comprises a positioning unit 320 arranged on the forestry vehicle 310 configured to generate positional data indicating the position of the forestry vehicle 310, and a control unit 330 configured to receive a terrain region data set of at least a part of the surrounding terrain of the forestry vehicle 310. The positioning unit 320 may comprise a satellite navigation system such as a global navigation satellite system, GNSS, unit or a high-precision GNSS unit, as well as a mathematical algorithm such as a simultaneous localization and mapping, SLAM, algorithm. The (high-precision) GNSS unit may further comprise real-time kinematic positioning, RTK. The precision of the (high-precision) GNSS unit may be less than 100 cm, more preferably less than 50 cm, and most preferably less than 10 cm. The control unit 330 in figure 3 is depicted as an internal control unit. It should be noted that it is likewise feasible with an external control unit, or a combination of an internal and an external control unit.

The terrain region data set comprises a plurality of sub-regions wherein a terrain metric is associated with each of the plurality of sub-regions indicating a characteristic terrain type. The sub-regions of the terrain region data set may be polygons and/or polyhedrons. The terrain metric may for example comprise an elevation, a slope, an obstruction, and/or a composition of the corresponding sub-region of the terrain region data set. The control unit 330 is further configured to determine an electric energy usage metric of at least two of the plurality of sub-regions based on the corresponding terrain metric. The electric energy usage metrics may indicate a required electric energy by the forestry vehicle 310 to manage corresponding sub-regions. For example, a sub-region comprising an elevation may be associated with a higher electric energy usage metric, compared to an electric energy usage metric of a sub-region comprising only level terrain.

Furthermore, the control unit 330 is configured to calculate a navigation route to a destination for the forestry vehicle 310 based on the determined electric energy usage metrics of the at least two sub-regions and the generated positional data. For example, the control unit 330 may calculate a navigation route which optimizes the energy consumption of the forestry vehicle 310 by prioritizing a navigation route comprising sub-regions with corresponding electric energy usage metrics indicating relatively low energy usage, compared to another navigation route indicating a higher energy usage. The forestry vehicle system 300 is suitable to operate both an autonomous forestry vehicle 310 and as an operating assistance to an operator of the forestry vehicle 310.

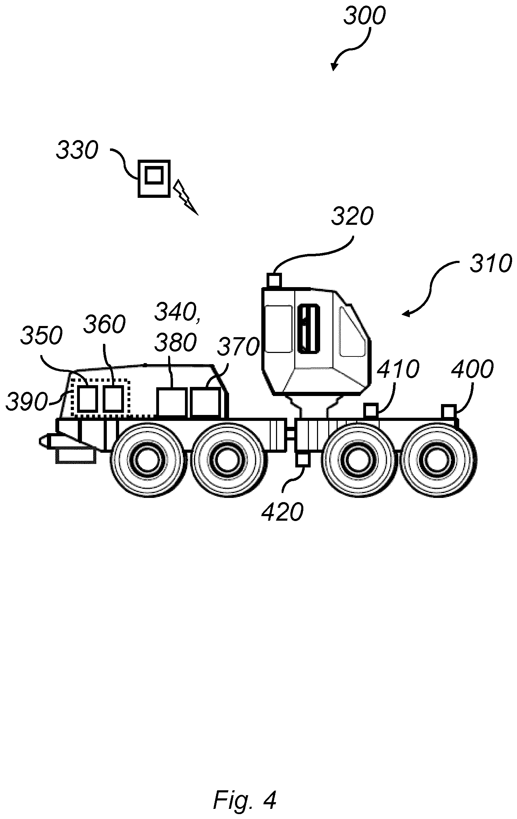

Figure 4 illustrates a schematic side view of the forestry vehicle system 300 according to an exemplifying embodiment of the present invention. It should be noted that the forestry vehicle system 300 and the forestry vehicle 310 shown in figure 4 has several features in common with the method, the forestry vehicle system, and the forestry vehicle described in figures 1, 2 and 3, and it is hereby referred to figures 1, 2 and 3, and the associated text, for an increased understanding of some of the features and/or functions of the forestry vehicle system 300 and the forestry vehicle 310.

The forestry vehicle 310 comprises an electric motor 340, and a first electric energy storage 350 associated with a first storage metric indicating a first electric energy storage property and configured to provide electric energy to the electric motor 340. The first electric energy storage 350 may for example comprise a battery, a capacitor, and/or a supercapacitor. The first storage metric indicating the first electric energy storage property may for example signify the ability of the first electric energy storage 350 to deliver and/or store electric energy. The first storage metric may for example comprise energy density, power density, capacity, equivalent series resistance (ESR), voltage, efficiency, size, weight, etc., of the first electric energy storage 350. The first electric energy storage 350 is configured to provide electric energy to the electric motor 340. Hence, the forestry vehicle 310 may completely by powered by the electric energy provided by the electric motor 340 from the first electric energy storage 350.

The control unit 330 is configured to calculate the navigation route also based on the first electric energy storage metric property. Hence, the control unit 330 is further configured to calculate the navigation route to a destination for the forestry vehicle 310 also based on the first electric energy storage metric property. For example, the navigation route may be calculated by the control unit 330 such that the first electric energy storage 350 has adequate time for recharging relative the surrounding terrain gradient. Recharging of the first electric energy storage 350 may for example be done by regenerative braking. According to an exemplifying embodiment, the forestry vehicle 310 comprises the electric motor 340 and the first electric energy storage 350, without the requirement of the control unit 330 calculating the navigation route based on the first storage metric.

The forestry vehicle 310 further comprises a second electric energy storage 360 associated with a second storage metric indicating a second electric energy storage property and configured to provide electric energy to the electric motor 340. Hence, the forestry vehicle 310 may completely by powered by the electric energy provided by the electric motor 340 from the first electric energy storage 350 and/or the second electric energy storage 360. The second electric energy storage 360 may for example comprise a battery, a capacitor, and/or a supercapacitor. The first and second electric energy storages 350, 360 may be of the same character or different. In figure 4, the first electric energy storage 350 comprises at least one battery and the second electric energy storage 360 comprises at least one capacitor. According to an example, the at least one capacitor of the second electric storage 360 is at least one supercapacitor.

The second storage metric indicating the second electric energy storage property may for example signify the ability of the second electric energy storage 360 to deliver and/or store electric energy. The second storage metric may for example comprise details regarding energy density, power density, capacity, equivalent series resistance (ESR), voltage, efficiency, size, weight, etc., of the second electric energy storage 360. The control unit 330 is configured to determine an electric energy control scheme for adaptively providing electric energy to the electric motor 340 from the first electric energy storage 350 and the second electric energy storage 360. The electric energy control scheme is based on the first storage metric and the second storage metric. The electric energy control scheme is further based on at least one of the terrain region data set, the determined electric energy usage metrics of the at least two of the plurality of sub-regions, and the position of the forestry vehicle 310.

The electric energy control scheme concludes the scheme, pattern, strategy, etc., in adaptively providing electric energy to the electric motor 340 from the first and second electric energy storage 350, 360. The electric energy provided to the electric motor 340 may simultaneously be provided from the first and second electric energy storage 350, 360. It is also feasible that the first and second electric energy storage 350, 360 alternately provides electric energy to the electric motor 340. The control unit 330 may be configured to determine the electric energy scheme in a way to optimize various of preferences, parameters, modes, or the like, of the forestry vehicle 310. For example, the control unit 330 may be configured to determine the electric energy scheme in regard to required electric energy for relevant sub-regions via the electric energy usage metrics. The first storage metric may indicate that the first electric energy storage 350 is more suitable to extract electric energy from in regard to a first sub-region, whereas the second storage metric may indicate that the second electric energy storage 360 is more suitable to extract electric energy from in regard to a second sub-region. The first electric energy storage 350 may for example have the ability to deliver electric energy for a relatively long time with a relatively low power, whilst the second electric energy storage 360 may have the ability to deliver electric energy with a relatively high power for a relatively short time. According to another example, the control unit 330 may be configured to determine the electric energy control scheme based on that the first and second storage metric indicates a state of health for the first and second electric energy storage 350, 360, respectively.

The control unit 330 is further configured to calculate the navigation route based on the electric energy control scheme. Thus, control unit 330 may be configured to calculate the navigation route so to match, balance, optimize, etc., the adaptively energy extraction from the first and second electric energy storage 350, 360. For example, the control unit 330 may calculate the navigation route such that a route which requires a high-power output for a relatively short duration of time is prioritized over a route which requires a high-power output for a longer duration of time, if this is a desirable, appropriate, and/or feasible, etc., approach of operating the first and second electric energy storage 350, 360.

The forestry vehicle 310 comprises a combustion engine 370, an electric motor 380, and an electric energy storage 390 configured to provide electric energy to the electric motor 380. The electric motor 380 may be the same as the previously mentioned electric motor 340. Furthermore, the electric energy storage 390 may be the same as the first and/or second electric energy storage 350, 360. The electric energy storage 390 may also comprise the first and/or the second electric energy storage 350, 360. Thus, the forestry vehicle 310 may comprise a combustion engine 370, an electric motor 380, and an electric energy storage 390 comprising a first electric energy storage 350 and a second electric energy storage 360, wherein the first and the second electric energy storage 350, 360 are configured to provide electric energy to the electric motor 380. It should also be noted that the combustion engine 370 typically is associated with a fuel tank, reservoir, or the like, configured to store the fuel before combustion occur in the combustion engine 370. The combustion engine 370 and the electric motor 380 are configured to adaptively provide propulsion for the forestry vehicle 310. Hence, the combustion engine 370 and the electric motor 380 may alternately or simultaneously provide propulsion for the forestry vehicle 310.

The control unit 330 is configured to determine a power control scheme for providing power to the propulsion of the forestry vehicle 310 from at least one of the combustion engine 370 and the electric motor 380. Hence, the power control scheme concludes the scheme, pattern, strategy, or the like, in adaptively providing propulsion to the forestry vehicle 310. The power control scheme is based on at least one of the terrain region data set, the electric energy usage metric, and the positional data. According to an example, the power control scheme may prioritize extracting (electric) energy from the electric energy storage 390, over extracting energy (e.g., mechanical energy) from the combustion engine 370, to provide propulsion to the forestry vehicle 310 via the electric motor 380 ahead of descending a slope. This may be performed to benefit the ability to recharge the electric energy storage 390 during descension of the slope, as the electric energy storage 390 would have a relatively low state of charge. Recharging of the electric energy storage 390 may for example be done by regenerative braking. In contrast, the power control scheme may ensure that the electric energy storage 390 is fully charged before climbing an elevation, if for example it is preferable to prioritize the utilization of the electric energy storage 390 and the electric motor 380 in relation to the combustion engine 370. This may be desirable due to e.g. lower amount of emission compared to prioritizing the utilization of the combustion engine 370.

The control unit 330 is further configured to calculate the navigation route based on the electric energy control scheme. Thus, the control unit 330 may calculate the navigation route so to match, balance, optimize, etc., the adaptively provided power of the propulsion of the forestry vehicle 310 from the combustion engine 370 and/or the electric motor 380. For example, the control unit 330 may calculate navigation route such that the route allows a prioritized extraction of power from the electric motor 380 over the combustion engine 370 by the power control scheme when possible. This may result in a navigation route which allows the electric energy storage 390 to have adequate time to recharge during for example a slope, to enable a continuously deliverance of (electric) energy from the electric energy storage 390 to the electric motor 380.

The forestry vehicle system 300 comprises a second sensor 400. configured to measure at least one terrain property of the surrounding terrain of the forestry vehicle 310. The second sensor 400 may for example be at least one of a radar unit, a camera unit, and a LIDAR unit. The second sensor 400 may be the same as the previously mentioned second sensor associated with the method to operate a forestry vehicle described herein. The terrain property may comprise details regarding e.g., elevation, slope, obstruction, and/or composition of the surrounding terrain. For example, the second sensor 400 may indicate aggravated operating conditions for the forestry vehicle 310 such as wet, sticky, and/or slippery terrain due to changes in the composition of the terrain such as increased water level, sludge, snow, etc. The control unit 330 is configured to calculate the navigation route based on the at least one terrain property. Thus, the control unit 330 may re-calculate, update, etc., the navigation route based on the at least one terrain property. Therefore, the second sensor 400 may allow for a real-time update of the navigation route based on the at least one terrain property. Additionally, the second sensor 400 may also constitute as a supplementing input parameter to the control unit 330 in determining the position of the forestry vehicle 310. It should also be noted that the measured terrain property may be transmitted from the second sensor 400 to a transceiver unit, configured to update the terrain region data set.

In figure 4, the forestry vehicle 310 further comprises a first sensor 410 configured to measure a steering angle, α, of the forestry vehicle 310 in relation to the surrounding terrain of the forestry vehicle 310. The steering angle, α, may for example indicate if a forthcoming movement of the forestry vehicle 310 according to the calculated navigation route is feasible or not. Furthermore, in figure 4, the forestry vehicle 310 comprises a third sensor 420 configured to measure a depth of the track of the forestry vehicle 310 and generate a depth data set. The depth data set may for example indicate the stability of the terrain. The control unit 330 according to figure 4 is further configured to calculate the navigation route based on the steering angle, α, and the depth data set.

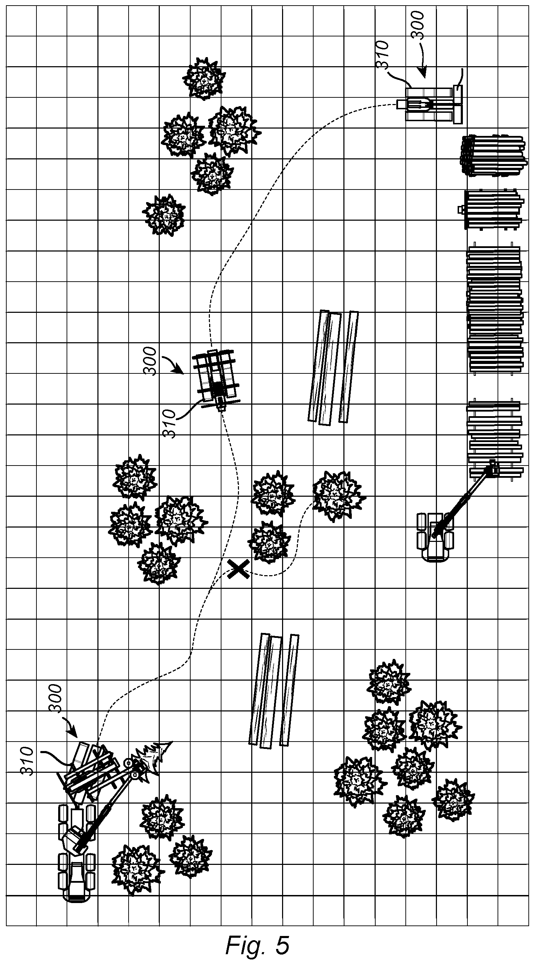

Figure 5 illustrates a schematic top view of an operating region for the forestry vehicle system 300 comprising a plurality of sub-regions according to an exemplifying embodiment of the present invention. It should be noted that the forestry vehicle system 300 and the forestry vehicle 310 shown in figure 5 has several features in common with the method and/or the forestry vehicle 310 described in figures 1 to 4, and it is hereby referred to figures 1 to 4, and the associated text, for an increased understanding of some of the features and/or functions of the forestry vehicle system 300 and the forestry vehicle 310.

In figure 5, the terrain region is divided into sub-regions with congruent squares. It should be noted that the sub-regions may have different shapes, such as a triangle. Furthermore, it is not required that all of the sub-regions have the same size or shape. As shown in figure 5, the sub-regions constitute a mesh, grid, or the like of the surrounding terrain. Each of the sub-regions are associated with a terrain metric. Collected data from the forestry vehicle system 300 and/or according to the method 100 may be utilized to update the terrain region data set. Updating the terrain region data set may comprise updating at least one terrain metric and/or the shape, size, etc., of at least one sub-region. According to figure 5, the forestry vehicle 310 is a forwarder, operating in sync with a harvester. It should be noted that the forestry vehicle system 300 is suitable to operate any forestry vehicle, such as a harvester.

While the invention has been illustrated and described in detail in the drawings and foregoing description, such illustration and description are to be considered illustrative or exemplary and not restrictive; the invention is not limited to the disclosed embodiments. The skilled person understands that many modifications, variations, and alterations are conceivable within the scope as defined in the appended claims.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. Method (100) to operate a forestry vehicle, wherein the method comprises:
determining (110) a position of the forestry vehicle,
receiving (120) a terrain region data set of at least a part of the surrounding terrain of the forestry vehicle, comprising a plurality of sub-regions wherein a terrain metric is associated with each of the plurality of sub-regions indicating a characteristic terrain type,
determining (130), by a control unit, an electric energy usage metric of at least two of the plurality of sub-regions, respectively, based on the corresponding terrain metric, and
calculating (140), by a control unit, a navigation route to a destination for the forestry vehicle based on the electric energy usage metrics of the at least two sub-regions and the position of the forestry vehicle.

2. The method according to claim 1, wherein the forestry vehicle comprises an electric motor and a first electric energy storage associated with a first storage metric indicating a first electric energy storage property and configured to provide electric energy to the electric motor,
wherein calculating a navigation route is based on the first storage metric.

3. The method according to claim 2, wherein the forestry vehicle comprises a second electric energy storage associated with a second storage metric indicating a second electric energy storage property and configured to provide electric energy to the electric motor, and wherein the method comprises:
determining (150) an electric energy control scheme for adaptively providing electric energy to the electric motor from the first electric energy storage and the second electric energy storage, based on
the first storage metric and the second storage metric, and
at least one of the terrain region data set, the determined electric energy usage metrics of the at least two of the plurality of sub-regions, and the position of the forestry vehicle.

4. The method according to claims 2 or 3, wherein calculating the navigation route is based on at least one of the electric energy control scheme, the first storage metric, and the second storage metric.

5. The method according to any one of claims 1 to 4, wherein the forestry vehicle comprises a combustion engine, an electric motor, and at least one electric energy storage associated with at least one storage metric indicating at least one electric energy storage property and configured to provide electric energy to the electric motor, wherein the combustion engine and the electric motor are configured to adaptively provide propulsion for the forestry vehicle, and wherein the method comprises:
determining (160) a power control scheme for providing power to the propulsion of the forestry vehicle from at least one of the combustion engine and the electric motor, based on at least one of the terrain region data set, the at least one electric energy usage metric, the at least one storage metric, and the position of the forestry vehicle,
wherein calculating the navigation route is based on the power control scheme.

6. The method according to any one of the preceding claims, wherein the forestry vehicle comprises a first sensor, and wherein the method comprises:
measuring (170), by the first sensor, a steering angle, α, of the forestry vehicle in relation to the surrounding terrain of the forestry vehicle,
wherein calculating the navigation route is based on the steering angle.

7. The method according to any one of the preceding claims, wherein the forestry vehicle comprises a second sensor, and wherein the method comprises:
measuring (180), by the second sensor, at least one terrain property of the surrounding terrain of the forestry vehicle,
wherein calculating the navigation route is based on the at least one terrain property.

8. The method according to any one of the preceding claims, wherein the forestry vehicle comprises a third sensor, and wherein the method comprises:
measuring (190), by the third sensor, a depth of the tracks of the forestry vehicle and generate a depth data set,
wherein calculating the navigation route is based on the depth data set.

9. The method according to any one of the preceding claims, wherein calculating the navigation route is associated with at least one operating mode that prioritizes at least one of a power distribution, an energy consumption, a time duration, a vehicle condition, and a suspension utilization.

10. A forestry vehicle system (300) for operating a forestry vehicle (310) comprising:
a positioning unit (320) arranged on the forestry vehicle and configured to generate positional data indicating the position of the forestry vehicle, and
a control unit (330) configured to
receive a terrain region data set of at least a part of the surrounding terrain of the forestry vehicle, comprising a plurality of sub-regions wherein a terrain metric is associated with each of the plurality of sub-regions indicating a characteristic terrain type,
determine an electric energy usage metric of at least two of the plurality of sub-regions based on the corresponding terrain metric, and
calculate a navigation route to a destination for the forestry vehicle based on the determined electric energy usage metrics of the at least two sub-regions and the generated positional data.

11. The forestry vehicle system according to claim 10, wherein the forestry vehicle comprises:
an electric motor (340), and
a first electric energy storage (350) associated with a first storage metric indicating a first electric energy storage property and configured to provide electric energy to the electric motor,
wherein the control unit is configured to calculate the navigation route also based on the first storage metric.

12. The forestry vehicle system according to claim 11, wherein the forestry vehicle comprises:
a second electric energy storage (360) associated with a second storage metric indicating a second electric energy storage property and configured to provide electric energy to the electric motor, wherein the control unit is configured to
determine an electric energy control scheme for adaptively providing electric energy to the electric motor from the first electric energy storage and the second electric energy storage based on
the first storage metric and the second storage metric, and
at least one of the terrain region data set, the determined electric energy usage metrics of the at least two of the plurality of sub-regions, and the position of the forestry vehicle, and
calculate the navigation route based on the electric energy control scheme.

13. The forestry vehicle system according to claim 12, wherein the first electric energy storage comprises at least one battery and the second electric energy storage comprises at least one capacitor.

14. The forestry vehicle system according to any one of claims 10 to 13, wherein the forestry vehicle comprises a combustion engine (370), an electric motor (380), and an electric energy storage (390) configured to provide electric energy to the electric motor, wherein the combustion engine and the electric motor are configured to adaptively provide propulsion for the forestry vehicle, and wherein the control unit is configured to
determine a power control scheme for providing power to the propulsion of the forestry vehicle from at least one of the combustion engine and the electric motor based on at least one of the terrain region data set, the electric energy usage metric, and the positional data, and
calculate the navigation route based on the power control scheme.

15. The forestry vehicle system according to any one of claims 10 to 14, comprising:
a second sensor (400) configured to measure at least one terrain property of the surrounding terrain of the forestry vehicle,
wherein the control unit is configured to calculate the navigation route based on the at least one terrain property.
